# EUROPEAN PATENT APPLICATION

(11) **EP 4 513 978 A1**
(43) Date of publication of application: **26.02.2025**
(21) Application number: 22937970.6
(22) Date of filing: 22.04.2022
(51) Int. Cl.: H04W 52/02, H04W 68/00

(54) **INFORMATION TRANSMISSION METHOD AND APPARATUS, DEVICE, AND STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Dehns Germany Partnerschaft mbB
(86) International application number: PCT/CN2022/088602
(87) International publication number: WO 2023/201734

(57) **Abstract**

The present disclosure provides an information transmission method and apparatus, a device, and a storage medium. The method is executed by a network device, and comprises: transmitting a wakeup signal to a user equipment, wherein the wakeup signal carries indication information; the indication information is used for indicating a wakeup behavior of user equipment groups; and the indication information comprises N bits, and N is a positive integer greater than or equal to 1. By using the method, the indication of the wakeup behavior of different user equipment groups is realized by transmitting one wakeup signal.

## Description

### TECHNICAL FIELD

The present disclosure relates to the field of wireless communication technology, and in particular to an information transmission method, apparatus, device, and storage medium.

### BACKGROUND

A user equipment uses a separate receiver to receive a low power wake-up signal (LP WUS). The user equipment needs to use a main transceiver to process downlink and uplink data normally. If the user equipment receives an LP WUS indicative of waking up, it will turn on the main receiver to receive and process downlink signals. If no LP WUS is received, or the LP WUS indicates not waking up, the user equipment will keep the main receiver in a sleep mode.

### SUMMARY

In view of above, the present disclosure provides an information transmission method, apparatus, device, and storage medium.

According to a first aspect of embodiments of the present disclosure, an information transmission method is provided, which is performed by a network device, including:
sending a wake-up signal to a user equipment, where the wake-up signal carries indication information, and the indication information indicates a wake-up behavior for a user equipment group.

The indication information includes N bits, where N is a positive integer greater than or equal to 1.

In an embodiment, each bit in the N bits of the indication information indicates whether to wake up the user equipment group corresponding to the bit.

In an embodiment, the N bits of the indication information are a first category of binary sequence, and the indication information indicates waking up all the user equipment groups corresponding to the wake-up signal.

In an embodiment, the first category of binary sequence is an all-1 sequence.

In an embodiment, the N bits of the indication information are a second category of binary sequence, and the indication information indicates not waking up any user equipment group corresponding to the wake-up signal.

In an embodiment, the second category of binary sequence is an all-0 sequence.

In an embodiment, the N bits of the indication information are a third category of binary sequence, and the indication information indicates waking up at least one user equipment group in the user equipment groups corresponding to the wake-up signal.

In an embodiment, sending the wake-up signal to the user equipment includes:
in response to the value of one bit in the N bits of the indication information being 1, sending a signal with energy greater than a set energy threshold or power greater than a set power threshold on M subcarriers corresponding to the bit with the value of 1; or
in response to the value of one bit in the N bits of the indication information being 0, sending a signal with energy less than or equal to the set energy threshold or power less than or equal to the set power threshold on M subcarriers corresponding to the bit with the value of 0, or not sending a signal,
where M is a positive integer greater than or equal to 1.

In an embodiment, sending the wake-up signal to the user equipment includes:
in response to the value of one bit in the N bits of the indication information being 1, sending a signal with energy greater than a set energy threshold or power greater than a set power threshold on a set frequency domain bandwidth corresponding to the bit with the value of 1; or
in response to the value of one bit in the N bits of the indication information being 0, sending a signal with energy less than or equal to the set energy threshold or power less than or equal to the set power threshold on a set frequency domain bandwidth corresponding to the bit with the value of 0, or not sending a signal.

In an embodiment, sending the wake-up signal to the user equipment includes:
in response to the value of one bit in the N bits of the indication information being 1, sending a signal with energy greater than a set energy threshold or power greater than a set power threshold on L time domain symbols corresponding to the bit with the value of 1; or
in response to the value of one bit in the N bits of the indication information being 0, sending a signal with energy less than or equal to the set energy threshold or power less than or equal to the set power threshold on L time domain symbols corresponding to the bit with the value of 0, or not sending a signal,
where L is a positive integer greater than or equal to 1.

In an embodiment, sending the wake-up signal to the user equipment includes:
in response to the value of one bit in the N bits of the indication information being 1, sending a signal with energy greater than a set energy threshold or power greater than a set power threshold during a first set time period corresponding to the bit with the value of 1; or
in response to the value of one bit in the N bits of the indication information being 0, sending a signal with energy less than or equal to the set energy threshold or power less than or equal to the set power threshold during a first set time period corresponding to the bit with the value of 0, or not sending a signal.

In an embodiment, the signal is agreed upon by a communication protocol, or configured by a network device.

In an embodiment, the signal is one of: a binary phase shift keying signal, an orthogonal phase shift keying signal, or an orthogonal amplitude modulation signal.

In an embodiment, before sending the wake-up signal to the user equipment, the method further includes:
sending a prefix signal to the user equipment.

The prefix signal is a signal with energy greater than a set energy threshold or power greater than a set power threshold in a second set time period.

In an embodiment, before sending the wake-up signal to the user equipment, the method further includes:
sending a prefix signal to the user equipment.

The prefix signal includes P bits, and the P bits are a fourth category of binary sequence.

According to a second aspect of embodiments of the present disclosure, an information transmission method is provided, which is performed by a user equipment, and comprising:
receiving a wake-up signal from a network device, where the wake-up signal carries indication information, and the indication information indicates a wake-up behavior for a user equipment group.

The indication information includes N bits, where N is a positive integer greater than or equal to 1.

In an embodiment, each of the N bits of the indication information indicates whether to wake up the user equipment group corresponding to the bit.

In an embodiment, the N bits of the indication information are a first category of binary sequence, and the indication information indicates waking up all the user equipment groups corresponding to the wake-up signal.

In an embodiment, the first category of binary sequence is an all-1 sequence.

In an embodiment, the N bits of the indication information are a second category of binary sequence, and the indication information indicates not waking up any user equipment group corresponding to the wake-up signal.

In an embodiment, the second category of binary sequence is an all-0 sequence.

In an embodiment, the N bits of the indication information are a third category of binary sequence, and the indication information indicates waking up at least one user equipment group in the user equipment groups corresponding to the wake-up signal.

In an embodiment, the method further includes:
in response to receiving a signal with energy greater than a set energy threshold or power greater than a set power threshold on M subcarriers, determining that the value of the bit in the indication information corresponding to the M subcarriers is 1; or
in response to receiving a signal with energy less than or equal to the set energy threshold or power less than or equal to the set power threshold on M subcarriers, or in response to receiving no signal, determining that the value of the bit in the indication information corresponding to the M subcarriers is 0,
where M is a positive integer greater than or equal to 1.

In an embodiment, the method further includes:
in response to receiving a signal with energy greater than a set energy threshold or power greater than a set power threshold on a set frequency domain bandwidth, determining that the value of the bit in the indication information corresponding to the set frequency domain bandwidth is 1; or
in response to receiving a signal with energy less than or equal to the set energy threshold or power less than or equal to the set power threshold on a set frequency domain bandwidth, or in response to receiving no signal, determining that the value of the bit in the indication information corresponding to the set frequency domain bandwidth is 0.

In an embodiment, the method further includes:
in response to receiving a signal with energy greater than a set energy threshold or power greater than a set power threshold on L time domain symbols, determining that the value of the bit in the indication information corresponding to the L time domain symbols is 1; or
in response to receiving a signal with energy less than or equal to the set energy threshold or power less than or equal to the set power threshold on L time domain symbols, or in response to receiving no signal, determining that the value of the bit in the indication information corresponding to the L time domain symbols is 0, where L is a positive integer greater than or equal to 1.

In an embodiment, the method further includes:
in response to receiving a signal with energy greater than a set energy threshold or power greater than a set power threshold during a first set time period, determining that the value of the bit in the indication information corresponding to the first set time period is 1; or
in response to receiving a signal with energy less than or equal to the set energy threshold or power less than or equal to the set power threshold, or in response to receiving no signal during a first set time period, determining that the value of the bit in the indication information corresponding to the first set time period is 0.

In an embodiment, the signal is agreed upon by a communication protocol or configured by a network device.

In an embodiment, the signal is one of: a binary phase shift keying signal, an orthogonal phase shift keying signal, or an orthogonal amplitude modulation signal.

In an embodiment, before receiving the wake-up signal from the network device, the method further includes:
receiving a prefix signal from the network device.

The prefix signal is a signal with energy greater than a set energy threshold or power greater than a set power threshold during a second set time period.

In an embodiment, before receiving the wake-up signal from the network device, the method further includes:
receiving a prefix signal from the network device.

The prefix signal includes P bits, and the P bits are a fourth category of binary sequence.

According to a third aspect of embodiments of the present disclosure, an information transmission apparatus is provided, which is arranged in the network device, and includes:
a transceiving module configured to send a wake-up signal to a user equipment,
where the wake-up signal carries indication information, and the indication information indicates a wake-up behavior for a user equipment group.

The indication information includes N bits, where N is a positive integer greater than or equal to 1.

According to a fourth aspect of embodiments of the present disclosure, an information transmission apparatus is provided, which is arranged in the user equipment, and includes:
a transceiving module configured to receive a wake-up signal from a network device, where the wake-up signal carries indication information, and the indication information indicates a wake-up behavior for a user equipment group.

The indication information includes N bits, where N is a positive integer greater than or equal to 1.

According to a fifth aspect of embodiments of the present disclosure, a network device is provided, including:
a processor; and
a memory for storing instructions being executable by the processor.

The processor is configured to execute the executable instructions in the memory to implement steps of the above-mentioned information transmission method.

According to a sixth aspect of embodiments of the present disclosure, a mobile terminal is provided, comprising:
a processor; and
a memory for storing instructions being executable by the processor.

The processor is configured to execute the executable instructions in the memory to implement steps of the above-mentioned information transmission method.

According to a seventh aspect of embodiments of the present disclosure, a non-transitory computer-readable storage medium is provided, on which executable instructions are stored. The executable instructions implement steps of the above-mentioned information transmission method when being executed by a processor.

In the above-mentioned implementation(s), the network device sends a wake-up signal carrying indication information to the user equipment, where the indication information indicates whether to wake up the user equipment group or not. After receiving the indication information, the user equipment determines whether to wake up itself or not based on the user equipment group to which the user equipment belongs. With the above-mentioned method, indication about the wake-up behavior for different user equipment groups is accomplished by sending a wake-up signal.

It should be understood that the above general description and the detailed description below are only examples and explanatory, and cannot limit the present disclosure.

### BRIEF DESCRIPTION OF THE DRAWINGS

The drawings described herein are used to provide further understanding of embodiments of the present disclosure and constitute a part of the present application. The schematic implementations of embodiments of the present disclosure and their descriptions are used to explain the embodiments of the present disclosure, and do not constitute improper limitations on the embodiments of the present disclosure.

The drawings herein are incorporated into the specification and constitute a part of the specification, showing implementations that conform to the embodiments of the present disclosure and used together with the specification to explain the principles of the embodiments of the present disclosure.
Fig. 1 is a flow chart of an information transmission method according to an example embodiment;
Fig. 2 is a flow chart of an information transmission method according to an example embodiment;
Fig. 3 is a flow chart of an information transmission method according to an example embodiment;
Fig. 4 is a flow chart of an information transmission method according to an example embodiment;
Fig. 5 is a structural diagram of an information transmission apparatus according to an example embodiment;
Fig. 6 is a structural diagram of an information transmission apparatus according to an example embodiment;
Fig. 7 is a block diagram of an information transmission device according to an example embodiment; and
Fig. 8 is a block diagram of an information transmission device according to an example embodiment.

### DETAILED DESCRIPTION OF THE EMBODIMENTS

The embodiments of the present disclosure are now further described in conjunction with the drawings and specific implementations.

The example embodiments will be described in detail here, and examples thereof are shown in the drawings. When the following description refers to the drawings, unless otherwise indicated, the same numbers in different drawings represent the same or similar elements. The implementations described in the following example embodiments do not represent all the implementations consistent with the embodiments of the present disclosure. Instead, they are only examples of apparatus, devices and methods consistent with some aspects of the present disclosure as detailed in the attached claims.

It should be noted that an embodiment of the present disclosure may include multiple steps. For ease of description, these steps are numbered. But these numbers are not limitations on the execution time slots and the execution order of these steps. These steps may be implemented in any order, and the embodiments of the present disclosure are not limited in this regard.

In the description of this application, the words "first", "second", "third", etc. are only used for the purpose of distinguishing the description, and cannot be understood as indicating or implying relative importance, nor can they be understood as indicating or implying order. "Multiple" means two or more.

"And/or" describes the association relationship of the associated objects, indicating that there may be three relationships. For example, A and/or B may indicate: A exists alone, A and B exist at the same time, and B exists alone.

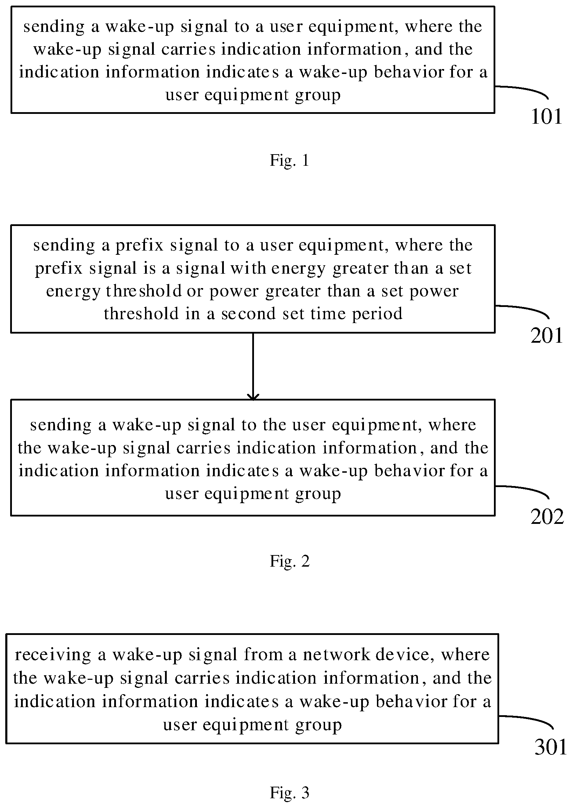

Embodiments of the present disclosure provide an information transmission method, which is performed by a network device. Fig. 1 is a flowchart of an information transmission method according to an example embodiment.

As shown in Fig. 1, the method includes:
step 101: sending a wake-up signal to a user equipment, where the wake-up signal carries indication information, and the indication information indicates a wake-up behavior for a user equipment group.

The indication information includes N bits, where N is a positive integer greater than or equal to 1.

In an embodiment, the network device sends the wake-up signal to the user equipment, and the wake-up signal carries indication information which is indicative of the wake-up behavior for the user equipment group, that is, the information indicative of waking up which user equipment group or groups and/or not waking up which user equipment group or groups. After receiving the wake-up signal, the user equipment determines whether to wake up itself based on the indication information carried in the wake-up signal and the user equipment group to which the the user equipment belongs. The indication information includes N bits.

It should be noted that the wake-up signal receiver may receive a synchronization signal to maintain synchronization. In this case, the user equipments in different groups may correspond to the wake-up signals at different time domain positions, so that an effect is achieved where the wake-up signal corresponds to the user equipment group, that is, an effect of time domain grouping. In addition, on the basis of the above time domain grouping, the wake-up signal sequence may be further grouped. That is, different wake-up signal sequences at the same time domain position will wake up different user equipment groups. In addition, there is also a situation where the wake-up signal receiver does not need to keep synchronized. In this case, the time domain grouping scheme cannot be adopted. However, different wake-up signal sequences may correspond to different user equipment groups.

In an embodiment, the wake-up behaviors for different user equipment groups are indicated by the N-bit sequence carried by the wake-up signal.

In an embodiment, the wake-up signal is generated by a multi-carrier on-off keying (MC-OOK) modulation method.

In the above embodiment(s), the network device sends the wake-up signal carrying indication information to the user equipment, where the indication information indicates whether to wake up the user equipment group or not. After receiving the indication information, the user equipment determines whether to wake up itself or not based on the user equipment group to which the user equipment belongs. Using the above method, indication about the wake-up behaviors for different user equipment groups is realized by sending a wake-up signal.

Embodiments of the present disclosure provide an information transmission method, which is performed by a network device.

The method includes sending a wake-up signal to a user equipment, where the wake-up signal carries indication information, and the indication information indicates the wake-up behavior for a user equipment group

The indication information includes N bits, and each of the N bits of the indication information indicates whether to wake up the user equipment group corresponding to the bit, where N is a positive integer greater than or equal to 1.

In an embodiment, the network device sends the wake-up signal to the user equipment, and the wake-up signal carries indication information which is indicative of the wake-up behavior for the user equipment group. The indication information includes N bits, each of which indicates whether to wake up the user equipment group corresponding to the bit. After receiving the wake-up signal, the user equipment determines whether to wake up itself or not based on the indication information carried in the wake-up signal and the user equipment group to which the user equipment belongs.

For example, the wake-up signal is generated by using an MC-OOK modulation method.

For example, the network device sends the wake-up signal to the user equipment, and the wake-up signal carries 4 bits of indication information, each of which corresponds to a user equipment group. When a bit takes the value of 1 or 0, it indicates waking up the user equipment group corresponding to the bit. When a bit takes the value of 0 or 1, it indicates not waking up the user equipment group corresponding to the bit. As an example, when a bit takes the value of 1, it indicates waking up the user equipment group corresponding to the bit. When a bit takes the value of 0, it indicates not waking up the user equipment group corresponding to the bit. For example, the 4-bit indication information is 1100, and from right to left, each bit indicates the wake-up behavior of user equipment groups 1 to 4, specifically indicating waking up user equipment group 3 and user equipment group 4, and not waking up user equipment group 1 and user equipment group 2.

In the above embodiment(s), the network device sends the wake-up signal carrying indication information to the user equipment, and the indication information indicates whether to wake up the user equipment group or not. After receiving the indication information, the user equipment determines whether to wake up itself or not based on the user equipment group to which the user equipment belongs. Using the above method, indication about the wake-up behaviors of different user equipment groups is realized by sending the wake-up signal.

Embodiments of the present disclosure provide an information transmission method, which is performed by a network device.

The method includes sending a wake-up signal to a user equipment, where the wake-up signal carries indication information, and the indication information indicates the wake-up behavior for the user equipment group.

The indication information includes N bits, where N is a positive integer greater than or equal to 1.

In response to the N bits of the indication information being a first category of binary sequence, the indication information indicates waking up all the user equipment groups corresponding to the wake-up signal.

In an embodiment, the network device sends the wake-up signal to the user equipment, and the wake-up signal carries indication information which is indicative of the wake-up behavior for the user equipment group. The indication information includes N bits. When the N bits are a first category of binary sequence, it indicates waking up all the user equipment groups corresponding to the wake-up signal. After receiving the wake-up signal, if the N bits are the first category of binary sequence, the user equipment determines to wake up itself.

For example, the wake-up signal is generated by using an MC-OOK modulation method.

In an embodiment, the first category of binary sequence is an all-1 sequence. When the network device needs to wake up all the user equipment groups, the wake-up signal carries an N-bit all-1 sequence. When the user equipment receives this all-1 sequence, the user equipment determines to wake up itself.

It should be noted that the first category of binary sequence is an all-1 sequence, which is only an example. The first category of binary sequence may also be other binary sequences.

In the above implementation(s), the network device sends the wake-up signal carrying indication information to the user equipment, and the indication information indicates whether to wake up the user equipment group or not. After receiving the indication information, the user equipment determines whether to wake up itself or not based on the user equipment group to which the user equipment belongs. Using the above method, indication about the wake-up behaviors for different user equipment groups is realized by sending the wake-up signal.

Embodiments of the present disclosure provide an information transmission method, which is performed by the network device.

The method includes sending a wake-up signal to a user equipment, where the wake-up signal carries indication information, and the indication information indicates the wake-up behavior for the user equipment group.

The indication information includes N bits, where N is a positive integer greater than or equal to 1.

In response to the N bits of the indication information being a second category of binary sequence, the indication information indicates not waking up any user equipment group corresponding to the wake-up signal.

In an embodiment, the network device sends the wake-up signal to the user equipment, and the wake-up signal carries indication information which is indicative of the wake-up behavior for a user equipment group. The indication information includes N bits. When the N bits are a second category of binary sequence, it indicates not waking up any user equipment group corresponding to the wake-up signal. After receiving the wake-up signal, if the N bits are the second category of binary sequence, the user equipment determines not to wake up itself.

For example, the wake-up signal is generated by using an MC-OOK modulation method.

In an embodiment, the second category of binary sequence is an all-0 sequence. When the network device does not wake up any user equipment group, the wake-up signal carries an N-bit all-0 sequence. When the user equipment receives this all-0 sequence, the user equipment determines not to wake up itself.

It should be noted that the second category of binary sequence is an all-0 sequence, which is only an example. The second category of binary sequence may also be other binary sequences.

In the above embodiment(s), the network device sends the wake-up signal carrying indication information to the user equipment, and the indication information indicates whether to wake up the user equipment group or not. After receiving the indication information, the user equipment determines whether to wake up itself or not based on the user equipment group to which the user equipment belongs. Using the above method, indication about the wake-up behaviors for different user equipment groups is accomplished by sending the wake-up signal.

Embodiments of the present disclosure provide an information transmission method, which is performed by a network device.

The method includes sending a wake-up signal to a user equipment, where the wake-up signal carries indication information, and the indication information indicates a wake-up behavior for a user equipment group.

The indication information includes N bits, where N is a positive integer greater than or equal to 1.

In response to the N bits of the indication information being a third category of binary sequence, the indication information indicates waking up at least one user equipment group in the user equipment groups corresponding to the wake-up signal.

In an embodiment, the network device sends the wake-up signal to the user equipment, and the wake-up signal carries indication information which is indicative of the wake-up behavior for the user equipment group. The indication information includes N bits. When the N bits are a third category of binary sequence, it indicates waking up one or more user equipment groups in the user equipment groups corresponding to the wake-up signal. After receiving the wake-up signal, if the N bits are the third category of binary sequence, the user equipment determines whether to wake up itself or not based on the user equipment group to which the user equipment belongs and the third category of binary sequence.

For example, the wake-up signal is generated by using an MC-OOK modulation method.

The third category of binary sequence is a sequence different from the first category of binary sequence and the second category of binary sequence. For example, when the first category of binary sequence is an all-1 sequence and the second category of binary sequence is an all-0 sequence, the third category of binary sequence is a sequence other than the all-1 sequence and the all-0 sequence. It should be noted that, except for the case where N=1, the third category of binary sequence may correspond to a variety of binary sequences with different value selections. Thus, there may also be a variety of corresponding relationships between the binary sequences with different value selectionsand the awakened user equipment groups.

Two example corresponding relationships are given below.

In an example embodiment, N=4. The 4 bits have a value of 0001, indicating waking up user equipment group 1; the 4 bits have a value of 0010, indicating waking up user equipment group 2; the 4 bits have a value of 0011, indicating waking up user equipment group 3; the 4 bits have a value of 0100, indicating waking up user equipment group 4; the 4 bits have a value of 0101, indicating waking up user equipment group 5; and so on, the 4 bits have a value of 1110, indicating waking up user equipment group 14. In this embodiment, one wake-up signal can support indication of the wake-up behaviors for up to 14 user equipment groups. In addition, when it is necessary to wake up two or more user equipment groups, the 4 bits need to be set as 1111 to wake up the two or three user equipment groups by waking up all the user equipment groups.

In an example embodiment, N=4. The 4 bits are 0001, indicating waking up user equipment group 1; the 4 bits are 0010, indicating waking up user equipment group 2; the 4 bits are 0011, indicating waking up user equipment group 3; the 4 bits are 0100, indicating waking up user equipment group 4; the 4 bits are 0101, indicating waking up user equipment group 5; the 4 bits are 0110, indicating waking up user equipment groups 1 and 2; the 4 bits are 0111, indicating waking up user equipment groups 1 and 3; the 4 bits are 1000, indicating waking up user equipment groups 1 and 4; the 4 bits are 1001, indicating waking up user equipment groups 1 and 5; the 4 bits are 1010, indicating waking up user equipment groups 2 and 3; the 4 bits are 1011, indicating waking up user equipment groups 2 and 4; the 4 bits are 1100, indicating waking up user equipment groups 2 and 5; the 4 bits are 1101, indicating waking up user equipment groups 3 and 4; the 4 bits are 1110, indicating waking up user equipment groups 3 and 5. In this embodiment, one wake-up signal can support indication about the wake-up behaviors for up to 5 user equipment groups. When it needs to wake up user equipment groups 4 and 5, or when it needs to wake up 3 of these user equipment groups, the 4 bits need to be set as 1111, so that user equipment groups 4 and 5 or 3 of these user equipment groups are awakened by waking up all the user equipment groups.

It should be noted that the above two embodiments are only example representations of the correspondence between binary sequences of multiple different value selections and awakened user equipment groups. The present disclosure also includes other correspondences, which are not described here one by one due to space constraints.

In the above implementation(s), the network device sends the wake-up signal carrying indication information to the user equipment, and the indication information indicates whether to wake up the user equipment group or not. After receiving the indication information, the user equipment determines whether to wake up itself or not based on the user equipment group to which the user equipment belongs. Using the above method, indication about the wake-up behaviors for different user equipment groups is realized by sending the wake-up signal.

Embodiments of the present disclosure provide an information transmission method, which is performed by a network device.

The method includes sending a wake-up signal to a user equipment, where the wake-up signal carries indication information, and the indication information indicates the wake-up behavior for a user equipment group.

The step of sending the wake-up signal to the user equipment includes: in response to the value of one bit in the N bits of the indication information being 1, sending a signal with energy greater than a set energy threshold or power greater than a set power threshold on M subcarriers corresponding to the bit with the value of 1; or in response to the value of one bit in the N bits of the indication information being 0, sending a signal with energy less than or equal to the set energy threshold or power less than or equal to the set power threshold on M subcarriers corresponding to the bit with the value of 0, or not sending a signal.

The indication information includes N bits, where N is a positive integer greater than or equal to 1, and M is a positive integer greater than or equal to 1.

In an embodiment, the network device sends the wake-up signal to the user equipment, and the wake-up signal carries indication information which is indicative of the wake-up behavior for the user equipment group. The indication information includes N bits. After receiving the wake-up signal, the user equipment determines whether to wake up itself or not based on the indication information carried in the wake-up signal and the user equipment group to which the user equipment belongs. When the network device sends the wake-up signal, if a bit is 1, a signal with energy greater than a set energy threshold or power greater than a set power threshold is sent on the M subcarriers corresponding to the bit; and if a bit is 0, a signal with energy less than or equal to the set energy threshold or power less than or equal to the set power threshold is sent on the M subcarriers corresponding to the bit, or no signal is sent.

It should be noted that the signals corresponding to the N bits together constitute the wake-up signal. The M subcarriers corresponding to the bit with a value of 1 are used to send a signal with energy greater than the set energy threshold or power greater than the set power threshold. The M subcarriers corresponding to the bit with a value of 0 are used to send a signal with energy less than or equal to the set energy threshold or power less than or equal to the set power threshold, or no signal is sent.

The set energy threshold and the set power threshold here may be set based on the capability of the user equipment receiver, or may be set by the network device.

For example, the wake-up signal is generated by using an MC-OOK modulation method.

For example, the network device sends the wake-up signal to the user equipment, and the wake-up signal carries indication information which is indicative of the wake-up behavior for the user equipment group. The indication information includes 4 bits, each bit corresponding to 3 subcarriers. Then, the wake-up signal corresponds to 12 subcarriers in the frequency domain. For example, if the 4 bits are 1100, no signal is sent on the 6 subcarriers corresponding to the first and second bits from the right, and a signal with energy greater than the set energy threshold is sent on the 6 subcarriers corresponding to the third and fourth bits from the right.

For example, the network device sends the wake-up signal to the user equipment, and the wake-up signal carries indication information which is indicative of the wake-up behavior for the user equipment group. The indication information includes 4 bits, each bit corresponding to 3 subcarriers. Then, the wake-up signal corresponds to 12 subcarriers in the frequency domain. For example, if the 4 bits are 0011, a signal with power greater than the set power threshold is sent on the 6 subcarriers corresponding to the first and second bits from the right, and a signal with power less than the set power threshold is sent on the 6 subcarriers corresponding to the third and fourth bits from the right.

In an embodiment, the signal sent by the network device is one of the following signals: a binary phase shift keying signal BPSK, an orthogonal phase shift keying signal QPSK, or an orthogonal amplitude modulation QAM signal.

For example, when a bit is 1, the signal sent by the network device on each subcarrier corresponding to the bit is the +1 or -1 signal in a binary phase shift keying signal.

In an embodiment, the signal sent by the network device is agreed upon by a communication protocol.

In an embodiment, the signal sent by the network device is configured by the network device.

In the above embodiment(s), the network device sends the wake-up signal carrying indication information to the user equipment, and the indication information indicates whether to wake up the user equipment group or not. After receiving the indication information, the user equipment determines whether to wake up itself or not based on the user equipment group to which the user equipment belongs. Using the above method, indication about the wake-up behaviors for different user equipment groups is realized by sending the wake-up signal.

Embodiments of the present disclosure provide an information transmission method, which is performed by a network device.

The method includes sending a wake-up signal to a user equipment, where the wake-up signal carries indication information, and the indication information indicates the wake-up behavior for the user equipment group.

The step of sending the wake-up signal to the user equipment includes: in response to the value of one bit in the N bits of the indication information being 1, sending a signal with energy greater than a set energy threshold or power greater than a set power threshold on a set frequency domain bandwidth corresponding to the bit with the value of 1; or in response to the value of one bit in the N bits of the indication information being 0, sending a signal with energy less than or equal to the set energy threshold or power less than or equal to the set power threshold on a set frequency domain bandwidth corresponding to the bit with the value of 0, or not sending a signal.

The indication information includes N bits, N being a positive integer greater than or equal to 1.

In an embodiment, the network device sends the wake-up signal to the user equipment, and the wake-up signal carries indication information which is indicative of the wake-up behavior for the user equipment group. The indication information includes N bits. After receiving the wake-up signal, the user equipment determines whether to wake up itself based on the indication information carried in the wake-up signal and the user equipment group to which the user equipment belongs. When the network device sends the wake-up signal, if a bit takes a value of 1, a signal with energy greater than a set energy threshold or power greater than a set power threshold is sent on a set frequency domain bandwidth corresponding to the bit; and if a bit takes a value of 0, a signal with energy less than or equal to the set energy threshold or power less than or equal to the set power threshold is sent on a set frequency domain bandwidth corresponding to the bit, or no signal is sent.

It should be noted that the signals corresponding to the N bits together constitute the wake-up signal. A signal with energy greater than the set energy threshold or power greater than the set power threshold is sent on the set frequency domain bandwidth corresponding to the bit with the value of 1. A signal with energy less than or equal to the set energy threshold or power less than or equal to the set power threshold is sent on the set frequency domain bandwidth corresponding to the bit with the value of 0, or no signal is sent.

The set energy threshold and the set power threshold here may be set based on the capability of the user equipment receiver, or may be set by the network device.

For example, the wake-up signal is generated by using an MC-OOK modulation method.

For example, the network device sends the wake-up signal to the user equipment, and the wake-up signal carries indication information which is indicative of the wake-up behavior for the user equipment group. The indication information includes 8 bits, each bit corresponding to a 45KHz frequency domain bandwidth. Then, the wake-up signal corresponds to a 360KHz frequency domain bandwidth in the frequency domain. For example, if the 8 bits are 11000000, no signal is sent on the 270KHz frequency domain bandwidth corresponding to the first bit to the sixth bit from the right, and a signal with energy greater than the set energy threshold is sent on the 90KHz frequency domain bandwidth corresponding to the seventh bit and the eighth bit from the right.

For example, the network device sends the wake-up signal to the user equipment, and the wake-up signal carries indication information which is indicative of the wake-up behavior for the user equipment group. The indication information includes 8 bits, each bit corresponding to a 45KHz frequency domain bandwidth. Then, the wake-up signal corresponds to a 360KHz frequency domain bandwidth in the frequency domain. For example, if the 8 bits are 00000011, a signal with power greater than the set power threshold is sent on the 90KHz frequency domain bandwidth corresponding to the first bit and the second bit from the right, and a signal with power less than the set power threshold is sent on the 270KHz frequency domain bandwidth corresponding to the third bit to the eighth bit from the right.

In an embodiment, the signal sent by the network device is one of the following signals: a binary phase shift keying signal, an orthogonal phase shift keying signal, or an orthogonal amplitude modulation signal.

For example, when a bit is 1, the signal sent by the network device on the frequency domain bandwidth corresponding to the bit is one of the constellation points in 16QAM.

In an embodiment, the signal sent by the network device is agreed upon by a communication protocol.

In an embodiment, the signal sent by the network device is configured by a network device.

In the above embodiment(s), the network device sends the wake-up signal carrying indication information to the user equipment, and the indication information indicates whether to wake up the user equipment group or not. After receiving the indication information, the user equipment determines whether to wake up itself or not based on the user equipment group to which the user equipment belongs. Using the above method, indication about the wake-up behaviors for different user equipment groups is realized by sending the wake-up signal.

Embodiments of the present disclosure provide an information transmission method, which is performed by a network device.

The method includes sending a wake-up signal to a user equipment, where the wake-up signal carries indication information, and the indication information indicates the wake-up behavior for the user equipment group.

The step of sending the wake-up signal to the user equipment includes: in response to the value of one bit in the N bits of the indication information being 1, sending a signal with energy greater than a set energy threshold or power greater than a set power threshold on L time domain symbols corresponding to the bit with the value of 1; or in response to the value of one bit in the N bits of the indication information being 0, sending a signal with energy less than or equal to the set energy threshold or power less than or equal to the set power threshold on L time domain symbols corresponding to the bit with the value of 0, or not sending a signal.

The indication information includes N bits, where N is a positive integer greater than or equal to 1, and L is a positive integer greater than or equal to 1.

In an embodiment, the network device sends the wake-up signal to the user equipment, and the wake-up signal carries indication information which is indicative of the wake-up behavior for the user equipment group. The indication information includes N bits. After receiving the wake-up signal, the user equipment determines whether to wake up itself or not based on the indication information carried in the wake-up signal and the user equipment group to which the user equipment belongs. When the network device sends the wake-up signal, if a bit takes a value of 1, a signal with energy greater than a set energy threshold or power greater than a set power threshold is sent on the L time domain symbols corresponding to the bit; and if a bit takes a value of 0, a signal with energy less than or equal to the set energy threshold or power less than or equal to the set power threshold is sent on the L time domain symbols corresponding to the bit, or no signal is sent.

It should be noted that the signals corresponding to the N bits together constitute the wake-up signal. A signal with energy greater than the set energy threshold or power greater than the set power threshold is sent on the L time domain symbols corresponding to the bit with a value of 1. A signal with energy less than or equal to the set energy threshold or power less than or equal to the set power threshold is sent on the L time domain symbols corresponding to the bit with a value of 0, or no signal is sent.

The set energy threshold and the set power threshold here may be set based on the capability of the user equipment receiver, or may be set by the network device.

For example, the wake-up signal is generated by using an MC-OOK modulation method.

For example, the network device sends the wake-up signal to the user equipment, and the wake-up signal carries indication information which is indicative of the wake-up behavior for the user equipment group. The indication information includes 4 bits, each bit corresponding to 2 time domain symbols. Then, the wake-up signal corresponds to 8 time domain symbols in the frequency domain. For example, if the 4 bits are 1100, no signal is sent on the 4 time domain symbols corresponding to the first and second bits from the right, and a signal with energy greater than the set energy threshold is sent on the 4 time domain symbols corresponding to the third and fourth bits from the right.

For example, the network device sends the wake-up signal to the user equipment, and the wake-up signal carries indication information which is indicative of the wake-up behavior for the user equipment group. The indication information includes 4 bits, each bit corresponding to 2 time domain symbols. Then, the wake-up signal corresponds to 8 time domain symbols in the frequency domain. For example, if the 4 bits are 0011, a signal with power greater than the set power threshold is sent on the 4 time domain symbols corresponding to the first and second bits from the right, and a signal with power less than the set power threshold is sent on the 4 time domain symbols corresponding to the third and fourth bits from the right.

In an embodiment, the signal sent by the network device is one of the following signals: a binary phase shift keying signal, an orthogonal phase shift keying signal, or an orthogonal amplitude modulation signal.

For example, when a bit is 1, the signal sent by the network device on each time domain symbol corresponding to the bit is the +1 or -1 signal in the binary phase shift keying signal.

In an embodiment, the signal sent by the network device is agreed upon by a communication protocol.

In an embodiment, the signal sent by the network device is configured by a network device.

In the above embodiment(s), the network device sends the wake-up signal carrying indication information to the user equipment, and the indication information indicates whether to wake up the user equipment group or not. After receiving the indication information, the user equipment determines whether to wake up itself or not based on the user equipment group to which the user equipment belongs. Using the above method, indication about the wake-up behaviors for different user equipment groups is realized by sending the wake-up signal.

Embodiments of the present disclosure provide an information transmission method, which is performed by a network device.

The method includes sending a wake-up signal to a user equipment, where the wake-up signal carries indication information, and the indication information indicates the wake-up behavior for the user equipment group.

The step of sending the wake-up signal to the user equipment includes: in response to a value of one bit in the N bits of the indication information being 1, sending a signal with energy greater than a set energy threshold or power greater than a set power threshold during a first set time period corresponding to the bit with the value of 1; or in response to a value of one bit in the N bits of the indication information being 0, sending a signal with energy less than or equal to the set energy threshold or power less than or equal to the set power threshold during a first set time period corresponding to the bit with the value of 0, or not sending a signal.

The indication information includes N bits, N being a positive integer greater than or equal to 1.

In an embodiment, the network device sends the wake-up signal to the user equipment, and the wake-up signal carries indication information which is indicative of the wake-up behavior for the user equipment group. The indication information includes N bits. After receiving the wake-up signal, the user equipment determines whether to wake up itself or not based on the indication information carried in the wake-up signal and the user equipment group to which the user equipment belongs. When the network device sends the wake-up signal, if a bit is 1, a signal with energy greater than the set energy threshold or power greater than the set power threshold is sent during the first set time period corresponding to the bit; and if a bit is 0, a signal with energy less than or equal to the set energy threshold or power less than or equal to the set power threshold is sent during the first set time period corresponding to the bit, or no signal is sent.

It should be noted that the signals corresponding to the N bits together constitute the wake-up signal. A signal with energy greater than the set energy threshold or power greater than the set power threshold is sent during the first set time period corresponding to the bit with the value of 1. A signal with energy less than or equal to the set energy threshold or power less than or equal to the set power threshold is sent during the first set time period corresponding to the bit with the value of 0, or no signal is sent.

The set energy threshold and the set power threshold here may be set based on the capability of the user equipment receiver, or may be set by the network device.

For example, the wake-up signal is generated by using an MC-OOK modulation method.

For example, the network device sends the wake-up signal to the user equipment, and the wake-up signal carries indication information which is indicative of the wake-up behavior for the user equipment group. The indication information includes 8 bits, each bit corresponding to a time period of 1/14ms. Then, the wake-up signal corresponds to a time period of 8/14ms in the frequency domain. For example, the 4 bits are 1100, and each bit corresponds to a time period of 1/14ms. Then, no signal is sent in the time period of 2/14ms corresponding to the first and second bits from the right, and a signal with energy greater than the set energy threshold is sent in the time period of 2/14ms corresponding to the third and fourth bits from the right.

For example, the network device sends the wake-up signal to the user equipment, and the wake-up signal carries indication information which is indicative of the wake-up behavior for the user equipment group. The indication information includes 8 bits, each bit corresponding to a time period of 1/14ms. Then, the wake-up signal corresponds to a time period of 8/14ms in the frequency domain. For example, the 4 bits are 0011, and each bit corresponds to a time period of 1/14ms. Then, a signal with power greater than the set power threshold is sent in the time period of 2/14ms corresponding to the first and second bits from the right, and a signal with power less than the set power threshold is sent in the time period of 2/14ms corresponding to the third and fourth bits from the right.

In an embodiment, the signal sent by the network device is one of the following signals: a binary phase shift keying signal, an orthogonal phase shift keying signal, or an orthogonal amplitude modulation signal.

For example, when a bit is 1, the signal sent by the network device in the first set time period corresponding to the bit is one of the constellation points in 64QAM.

In an embodiment, the signal sent by the network device is agreed upon by a communication protocol.

In an embodiment, the signal sent by the network device is configured by a network device.

In the above embodiment(s), the network device sends the wake-up signal carrying indication information to the user equipment, and the indication information indicates whether to wake up the user equipment group or not. After receiving the indication information, the user equipment determines whether to wake up itself or not based on the user equipment group to which the user equipment belongs. Using the above method, indication about the wake-up behaviors for different user equipment groups is realized by sending the wake-up signal.

Embodiments of the present disclosure provide an information transmission method, which is performed by a network device. Fig. 2 is a flowchart of an information transmission method according to an example embodiment.

As shown in Fig. 2, the method includes:
step 201: sending a prefix signal to a user equipment, where the prefix signal is a signal with energy greater than a set energy threshold or power greater than a set power threshold in a second set time period; and
step 202: sending a wake-up signal to the user equipment, where the wake-up signal carries indication information, and the indication information indicates the wake-up behavior for the user equipment group.

The indication information includes N bits, where N is a positive integer greater than or equal to 1.

In an embodiment, the network device first sends a prefix signal to the user equipment, and then sends a wake-up signal to the user equipment, where the wake-up signal carries indication information for indicating the wake-up behavior for the user equipment group, and the indication information includes N bits. After receiving the wake-up signal, the user equipment determines whether to wake up itself or not based on the indication information carried in the wake-up signal and the user equipment group to which the user equipment belongs.

For example, the wake-up signal is generated by using an MC-OOK modulation method.

The prefix signal is a signal known to the user equipment. In this embodiment, the prefix signal is sent before sending the wake-up signal. Thus, when the wake-up signal receiver of the user equipment does not receive the synchronization information, the user equipment can determine the arrival time of the wake-up signal based on the prefix signal, and then accurately determine the indication information carried by the wake-up signal.

For example, when the wake-up signal receiver of the user equipment does not receive the synchronization information, the MC-OOK modulation method is adopted. When the wake-up signal is 0011, for the two bits with a value of 0, the network device will not send any signal, and the user equipment will not receive any signal. The network device only sends signals for the two bits with a value of 1, and thus the user equipment can only receive the signal corresponding to the two bits 11. Therefore, the user equipment cannot determine the received signal being which one of the three types of signals 0011, 0110, and 1100, and thus cannot accurately determine the received wake-up signal.

In order to solve the above problem, a prefix signal is sent before sending the wake-up signal, and the P bits included in the prefix signal are an all-1 sequences, where P is a positive integer greater than or equal to 1.

For example, P=3, and the prefix signal is 3 bits with all the values of 1. Therefore, the user equipment receives the 3-bit prefix signal before receiving the wake-up signal. When the prefix signal ends, the user equipment determines that this is the start time of the wake-up signal, and can accurately determine the indication information in the wake-up signal.

For example, P=3, and the prefix signal is 3 bits with all the values of 1. The user equipment receives the 3-bit prefix signal before receiving the wake-up signal. After the set time interval at the end of the prefix signal, the user equipment determines that this is the start time of the wake-up signal, and can accurately determine the indication information in the wake-up signal. That is, in this embodiment, there is a set time interval between the end time of the prefix signal and the start time of the wake-up signal.

It should be noted that the prefix signal is a signal with energy greater than the set energy threshold or power greater than the set power threshold during the second set time period. For example, the prefix signal is an all-1 sequence containing P bits, where P is a positive integer greater than or equal to 1. Each bit corresponds to L time domain symbols or a third set time period. A number P of third set time lengths are equal to the second set time period. The third set time period here may be equal to or not equal to the first set time period in the aforementioned embodiment(s).

In the above implementation(s), the network device sends the wake-up signal carrying indication information to the user equipment, and the indication information indicates whether to wake up the user equipment group or not. After receiving the indication information, the user equipment determines whether to wake up itself or not based on the user equipment group to which the user equipment belongs. Using the above method, indication about the wake-up behaviors for different user equipment groups is realized by sending the wake-up signal.

Embodiments of the present disclosure provide an information transmission method, which is performed by the network device.

The method includes:
sending a prefix signal to the user equipment, where the prefix signal includes P bits, and the P bits are a fourth category of binary sequence; and
sending a wake-up signal to the user equipment, where the wake-up signal carries indication information, and the indication information indicates the wake-up behavior for the user equipment group.

The indication information includes N bits, where N is a positive integer greater than or equal to 1.

In an implementation, the network device first sends a prefix signal to the user equipment, and then sends a wake-up signal to the user equipment. The wake-up signal carries indication information for indicating the wake-up behavior for the user equipment group, and the indication information includes N bits. After receiving the wake-up signal, the user equipment determines whether to wake up itself or not based on the indication information carried in the wake-up signal and the user equipment group to which the user equipment belongs.

For example, the wake-up signal is generated by using an MC-OOK modulation method.

The prefix signal is a signal known to the user equipment. The prefix signal is sent before sending the wake-up signal. Thus, when the wake-up signal receiver of the user equipment does not receive the synchronization information, the user equipment can determine the arrival time of the wake-up signal based on the prefix signal, and then accurately determine the indication information carried by the wake-up signal.

For example, the P bits included in the prefix signal may be a fourth category of binary sequence. When the user equipment receives the fourth category of binary sequence, it can be determined that the time when the fourth category of binary sequence ends is the start time of the wake-up signal.

For example, the P bits included in the prefix signal may be the fourth category of binary sequence. After a set time interval at the end of the fourth category of binary sequence received by the user equipment, the user equipment determines that this time is the start time of the wake-up signal, and then can accurately determine the indication information in the wake-up signal. That is, in this embodiment, there is a set time interval between the end time of the prefix signal and the start time of the wake-up signal.

The fourth category of binary sequence is a set sequence. For example, when P=4, the fourth category of binary sequence is 1010.

When the network device sends a prefix signal, if the value of one bit in the P bits is 1, a signal with energy greater than a set energy threshold or power greater than a set power threshold is sent in the time period corresponding to the bit with the value of 1; and if the value of one bit in the P bits is 0, a signal with energy less than or equal to the set energy threshold or power less than or equal to the set power threshold is sent in the time period corresponding to the bit with the value of 0, or no signal is sent.

In the above implementation(s), the network device sends a wake-up signal carrying indication information to the user equipment, and the indication information indicates whether to wake up the user equipment group or not. After receiving the indication information, the user equipment determines whether to wake up itself or not based on the user equipment group to which the user equipment belongs. Using the above method, indication about the wake-up behaviors of different user equipment groups is achieved by sending the wake-up signal.

Embodiments of the present disclosure provide an information transmission method, which is performed by the user equipment. Fig. 3 is a flow chart of an information transmission method according to an example embodiment.

As shown in Fig. 3, the method includes:
step 301: receiving a wake-up signal from a network device, where the wake-up signal carries indication information, and the indication information indicates the wake-up behavior for the user equipment group.

The indication information includes N bits, where N is a positive integer greater than or equal to 1.

In an implementation, the user equipment receives the wake-up signal sent by the network device, and the wake-up signal carries indication information for indicating the wake-up behavior for the user equipment group, that is, the information indicative of waking up which user equipment group or groups and/or not waking up which user equipment group or groups. After receiving the wake-up signal, the user equipment determines whether to wake up itself or not based on the indication information carried in the wake-up signal and the user equipment group to which the user equipment belongs. The indication information includes N bits.

For example, the wake-up signal is generated by using an MC-OOK modulation method.

In the above implementation(s), the network device sends the wake-up signal carrying indication information to the user equipment, and the indication information indicates whether to wake up the user equipment group or not. After receiving the indication information, the user equipment determines whether to wake up itself or not based on the user equipment group to which the user equipment belongs. Using the above method, indication about the wake-up behaviors for different user equipment groups is achieved by sending the wake-up signal.

Embodiments of the present disclosure provide an information transmission method, which is performed by the user equipment.

The method includes:
receiving a wake-up signal from a network device, where the wake-up signal carries indication information, and the indication information indicates the wake-up behavior for the user equipment group.

The indication information includes N bits, and each bit in the N bits of the indication information indicates whether to wake up the user equipment group corresponding to the bit, where N is a positive integer greater than or equal to 1.

In an implementation, the user equipment receives a wake-up signal sent by the network device, and the wake-up signal carries indication information for indicating the wake-up behavior for the user equipment group. The indication information includes N bits, and each bit indicates whether to wake up the user equipment group corresponding to the bit. After receiving the wake-up signal, the user equipment determines whether to wake up itself based on the indication information carried in the wake-up signal and the user equipment group to which the user equipment belongs.

For example, the wake-up signal is generated by using an MC-OOK modulation method.

For example, the user equipment receives a wake-up signal sent by a network device, and the wake-up signal carries 4 bits of indication information, where each bit corresponds to a user equipment group. When a bit takes a value of 1 or 0, it indicates waking up the user equipment group corresponding to the bit; and when a bit takes a value of 0 or 1, it indicates not waking up the user equipment group corresponding to the bit. For example, when a bit takes a value of 1, it indicates waking up the user equipment group corresponding to the bit; and when a bit takes a value of 0, it indicates not waking up the user equipment group corresponding to the bit. For example, the 4-bit indication information is 1100. From right to left, each bit indicates the wake-up behavior for user equipment groups 1-4, specifically indicating waking up user equipment groups 3 and 4, and not waking up user equipment groups 1 and 2.

In the above implementation(s), the network device sends the wake-up signal carrying indication information to the user equipment, and the indication information indicates whether to wake up the user equipment group or not. After receiving the indication information, the user equipment determines whether to wake up itself or not based on the user equipment group to which the user equipment belongs. Using the above method, indication about the wake-up behaviors of different user equipment groups is realized by sending the wake-up signal.

Embodiments of the present disclosure provide an information transmission method, which is performed by the user equipment.

The method includes:
receiving a wake-up signal from a network device, where the wake-up signal carries indication information, and the indication information indicates the wake-up behavior for the user equipment group.

The indication information includes N bits, where N is a positive integer greater than or equal to 1.

In response to the N bits of the indication information being a first category of binary sequence, the indication information indicates waking up all the user equipment groups corresponding to the wake-up signal.

In an implementation, the user equipment receives the wake-up signal sent by the network device, and the wake-up signal carries indication information for indicating the wake-up behavior for the user equipment group. The indication information includes N bits. When the N bits are the first category of binary sequence, it indicates waking up all the user equipment groups corresponding to the wake-up signal. After receiving the wake-up signal, if the N bits are the first category of binary sequence, the user equipment determines to wake up itself.

For example, the wake-up signal is generated by using an MC-OOK modulation method.

In an embodiment, the first category of binary sequence is an all-1 sequence. When the network device needs to wake up all the user equipment groups, the wake-up signal carries an N-bit all-1 sequence. When the user equipment receives the all-1 sequence, the user equipment determines to wake up itself.

It should be noted that the above-mentioned first category of binary sequence being an all-1 sequence is only an example, and the first category of binary sequence may also be other binary sequences.

In the above embodiment(s), the network device sends the wake-up signal carrying indication information to the user equipment, and the indication information indicates whether to wake up the user equipment group or not. After receiving the indication information, the user equipment determines whether to wake up itself or not based on the user equipment group to which the user equipment belongs. Using the above method, indication about the wake-up behaviors for different user equipment groups is realized by sending the wake-up signal.

Embodiments of the present disclosure provide an information transmission method, which is performed by the user equipment.

The method includes:
receiving a wake-up signal from a network device, where the wake-up signal carries indication information, and the indication information indicates the wake-up behavior for a user equipment group.

The indication information includes N bits, where N is a positive integer greater than or equal to 1.

In response to the N bits of the indication information being a second category of binary sequence, the indication information indicates not waking up any user equipment group corresponding to the wake-up signal.

In an embodiment, the user equipment receives the wake-up signal sent by the network device, and the wake-up signal carries indication information for indicating the wake-up behavior for the user equipment group. The indication information includes N bits. When the N bits are the second category of binary sequence, it indicates not waking up any user equipment group corresponding to the wake-up signal. After receiving the wake-up signal, if the N bits are the second category of binary sequence, the user equipment determines not to wake up itself.

For example, the wake-up signal is generated by using an MC-OOK modulation method.

In an embodiment, the second category of binary sequence is an all-0 sequence. When the network device does not wake up any user equipment group, an N-bit all-0 sequence is carried in the wake-up signal. When the user equipment receives the all-0 sequence, the user equipment determines not to wake up itself.

It should be noted that the second category of binary sequence is an all-0 sequence, which is only an example, and the second category of binary sequence may also be other binary sequences.

In the above implementation(s), the network device sends the wake-up signal carrying indication information to the user equipment, and the indication information indicates whether to wake up the user equipment group or not. After receiving the indication information, the user equipment determines whether to wake up itself or not based on the user equipment group to which the user equipment belongs. Using the above method, indication about the wake-up behaviors for different user equipment groups is achieved by sending the wake-up signal.

Embodiments of the present disclosure provide an information transmission method, which is performed by the user equipment.

The method includes:
receiving a wake-up signal from a network device, where the wake-up signal carries indication information, and the indication information indicates the wake-up behavior for the user equipment group.

The indication information includes N bits, where N is a positive integer greater than or equal to 1;
In response to the N bits of the indication information being a third category of binary sequence, the indication information indicates waking up at least one user equipment group in the user equipment groups corresponding to the wake-up signal.

In an embodiment, the user equipment receives the wake-up signal sent by the network device, and the wake-up signal carries indication information for indicating the wake-up behavior for the user equipment group. The indication information includes N bits. When the N bits are the third category of binary sequence, it indicates waking up one or more user equipment groups in the user equipment groups corresponding to the wake-up signal. After receiving the wake-up signal, if the N bits are the third category of binary sequence, the user equipment determines whether to wake up itself based on the user equipment group to which the user equipment belongs and the third category of binary sequence.

For example, the wake-up signal is generated by using an MC-OOK modulation method.

The third category of binary sequence is a sequence different from the first category of binary sequence and the second category of binary sequence. For example, when the first category of binary sequence is an all-1 sequence and the second category of binary sequence is an all-0 sequence, the third category of binary sequence is a sequence other than the all-1 sequence and the all-0 sequence. It should be noted that, except for the case where N=1, the third category of binary sequence may correspond to a plurality of various binary sequences with different value selections. Then, there may be a variety of corresponding relationships between the binary sequences with different value selections and the awakened user equipment groups.

The correspondence between the binary sequences with different value selections and the awakened user equipment groups may refer to the descriptions in the above-mentioned embodiments, which will not be repeated here.

In the above-mentioned embodiment(s), the network device sends the wake-up signal carrying indication information to the user equipment, and the indication information indicates whether to wake up the user equipment group or not. After receiving the indication information, the user equipment determines whether to wake up itself or not based on the user equipment group to which the user equipment belongs. Using the above-mentioned method, indication about the wake-up behaviors for different user equipment groups is realized by sending the wake-up signal.

Embodiments of the present disclosure provide an information transmission method, which is performed by a user equipment.

The method includes:
receiving a wake-up signal from a network device, where the wake-up signal carries indication information, and the indication information indicates the wake-up behavior for the user equipment group;
in response to receiving a signal with energy greater than a set energy threshold or power greater than a set power threshold on M subcarriers, determining that the value of the bit in the indication information corresponding to the M subcarriers is 1; or in response to receiving a signal with energy less than or equal to the set energy threshold or power less than or equal to the set power threshold on M subcarriers, or in response to receiving no signal, determining that the value of the bit in the indication information corresponding to the M subcarriers is 0.

The indication information includes N bits, where N is a positive integer greater than or equal to 1, and M is a positive integer greater than or equal to 1.

In an embodiment, the user equipment receives the wake-up signal sent by the network device, and the wake-up signal carries indication information for indicating the wake-up behavior for the user equipment group. The indication information includes N bits. After receiving the wake-up signal, the user equipment determines whether to wake up itself or not based on the indication information carried in the wake-up signal and the user equipment group to which the user equipment belongs. When the user equipment receives the wake-up signal, if a signal with energy greater than the set energy threshold or power greater than the set power threshold is received on the M subcarriers corresponding to one bit, the value of this bit is determined to be 1; and if a signal with energy less than or equal to the set energy threshold or power less than or equal to the set power threshold is received on the M subcarriers corresponding to one bit, or if no signal is received, the value of this bit is determined to be 0.

For example, the wake-up signal is generated by using an MC-OOK modulation method.

The set energy threshold and the set power threshold here may be set based on the capability of the user equipment receiver, or set by the network device.

In an embodiment, the signal received by the user equipment is one of the following signals: a binary phase shift keying signal BPSK, an orthogonal phase shift keying signal QPSK, or an orthogonal amplitude modulation QAM signal.

For example, when the signal received by the user equipment on each subcarrier corresponding to one bit is the +1 or -1 signal in the binary phase shift keying signal, the bit value is determined to be 1.

In an embodiment, the signal received by the user equipment is agreed upon by a communication protocol.

In an embodiment, the signal received by the user equipment is configured by a network device.

In the above implementation(s), the network device sends the wake-up signal carrying indication information to the user equipment, and the indication information indicates whether to wake up the user equipment group or not. After receiving the indication information, the user equipment determines whether to wake up itself or not based on the user equipment group to which the user equipment belongs. Using the above method, indication about the wake-up behaviors for different user equipment groups is realized by sending the wake-up signal.

Embodiments of the present disclosure provide an information transmission method, which is performed by the user equipment.

The method includes:
receiving a wake-up signal from a network device, where the wake-up signal carries indication information, and the indication information indicates the wake-up behavior for the user equipment group;
in response to receiving a signal with energy greater than a set energy threshold or power greater than a set power threshold on a set frequency domain bandwidth, determining that the value of the bit in the indication information corresponding to the set frequency domain bandwidth is 1; or in response to receiving a signal with energy less than or equal to the set energy threshold or power less than or equal to the set power threshold on the set frequency domain bandwidth, or in response to receiving no signal, determining that the value of the bit in the indication information corresponding to the set frequency domain bandwidth is 0.

The indication information includes N bits, where N is a positive integer greater than or equal to 1.

In an embodiment, the user equipment receives the wake-up signal sent by the network device, and the wake-up signal carries indication information for indicating the wake-up behavior for the user equipment group. The indication information includes N bits. After receiving the wake-up signal, the user equipment determines whether to wake up itself based on the indication information carried in the wake-up signal and the user equipment group to which the user equipment belongs. When the user equipment receives the wake-up signal, if a signal with energy greater than a set energy threshold or power greater than a set power threshold is received on a set frequency domain bandwidth corresponding to a bit, the value of this bit is determined to be 1; and if a signal with energy less than or equal to the set energy threshold or power less than or equal to the set power threshold is received on a set frequency domain bandwidth corresponding to a bit, or if no signal is received, the value of this bit is determined to be 0.

For example, the wake-up signal is generated by using an MC-OOK modulation method.

The set energy threshold and the set power threshold here may be set, for example, based on the capability of the user equipment receiver, or set by the network device.

In an embodiment, the signal received by the user equipment is one of the following signals: a binary phase shift keying signal, an orthogonal phase shift keying signal, or an orthogonal amplitude modulation signal.

For example, when the signal received by the user equipment on the frequency domain bandwidth corresponding to one bit is one of the constellation points in 16QAM, it is determined that the value of this bit is 1.

In an embodiment, the signal received by the user equipment is agreed upon by a communication protocol.

In an embodiment, the signal received by the user equipment is configured by the network device.

In the above embodiment(s), the network device sends the wake-up signal carrying indication information to the user equipment, and the indication information indicates whether to wake up the user equipment group or not. After receiving the indication information, the user equipment determines whether to wake up itself or not based on the user equipment group to which the user equipment belongs. Using the above method, indication about the wake-up behaviors for different user equipment groups is realized by sending the wake-up signal.

Embodiments of the present disclosure provide an information transmission method, which is performed by the user equipment.

The method includes:
receiving a wake-up signal from a network device, where the wake-up signal carries indication information, and the indication information indicates the wake-up behavior for a user equipment group;
in response to receiving a signal with energy greater than a set energy threshold or power greater than a set power threshold on L time domain symbols, determining that the value of the bit in the indication information corresponding to the L time domain symbols is 1; or in response to receiving a signal with energy less than or equal to the set energy threshold or power less than or equal to the set power threshold on L time domain symbols, or in response to receiving no signal, determining that the value of the bit in the indication information corresponding to the L time domain symbols is 0.

The indication information includes N bits, where N is a positive integer greater than or equal to 1, and L is a positive integer greater than or equal to 1.

In an embodiment, the user equipment receives the wake-up signal sent by the network device, and the wake-up signal carries indication information for indicating the wake-up behavior for the user equipment group. The indication information includes N bits. After receiving the wake-up signal, the user equipment determines whether to wake up itself or not based on the indication information carried in the wake-up signal and the user equipment group to which the user equipment belongs. When the user equipment receives the wake-up signal, if a signal with energy greater than the set energy threshold or power greater than the set power threshold is received on the L time domain symbols corresponding to one bit, the value of this bit is determined to be 1; and if a signal with energy less than or equal to the set energy threshold or power less than or equal to the set power threshold is received on the L time domain symbols corresponding to one bit, or if no signal is received, the value of this bit is determined to be 0.

For example, the wake-up signal is generated by using an MC-OOK modulation method.

The set energy threshold and the set power threshold here may be set based on the capability of the user equipment receiver, or set by the network device, for example.

In an embodiment, the signal received by the user equipment is one of the following signals: a binary phase shift keying signal, an orthogonal phase shift keying signal, or an orthogonal amplitude modulation signal.

For example, when the signal received by the user equipment on each time domain symbol corresponding to one bit is the +1 or -1 signal in the binary phase shift keying signal, the value of this bit is determined to be 1.

In an embodiment, the signal received by the user equipment is agreed upon by a communication protocol.

In an embodiment, the signal received by the user equipment is configured by the network device.

In the above implementation(s), the network device sends the wake-up signal carrying indication information to the user equipment, and the indication information indicates whether to wake up the user equipment group or not. After receiving the indication information, the user equipment determines whether to wake up itself or not based on the user equipment group to which the user equipment belongs. Using the above method, indication about the wake-up behaviors for different user equipment groups is realized by sending the wake-up signal.

Embodiments of the present disclosure provide an information transmission method, which is performed by the user equipment.

The method includes:
receiving a wake-up signal from a network device, where the wake-up signal carries indication information, and the indication information indicates the wake-up behavior for the user equipment group;
in response to receiving a signal with energy greater than a set energy threshold or power greater than a set power threshold during a first set time period, determining that the value of the bit in the indication information corresponding to the first set time period is 1; or in response to receiving a signal with energy less than or equal to the set energy threshold or power less than or equal to the set power threshold during the first set time period, or in response to receiving no signal, determining that the value of the bit in the indication information corresponding to the first set time period is 0.

The indication information includes N bits, where N is a positive integer greater than or equal to 1.

In an embodiment, the user equipment receives the wake-up signal sent by the network device, and the wake-up signal carries indication information for indicating the wake-up behavior for the user equipment group. The indication information includes N bits. After receiving the wake-up signal, the user equipment determines whether to wake up itself based on the indication information carried in the wake-up signal and the user equipment group to which the user equipment belongs. When the network device receives the wake-up signal, if a signal with energy greater than a set energy threshold or power greater than a set power threshold is sent during a first set time period corresponding to a bit, the value of this bit is determined to be 1; and if a signal with energy less than or equal to the set energy threshold or power less than or equal to the set power threshold is received during a first set time period corresponding to a bit, or if no signal is received, the value of this bit is determined to be 0.

For example, the wake-up signal is generated by using an MC-OOK modulation method.

The set energy threshold and the set power threshold here may be set based on the capability of the user equipment receiver, or may be set by the network device, for example.

In an embodiment, the signal received by the user equipment is one of the following signals: a binary phase shift keying signal, an orthogonal phase shift keying signal, or an orthogonal amplitude modulation signal.

For example, when the signal received by the user equipment in the first set time period corresponding to one bit is one of the constellation points in 64QAM, it is determined that the value of this bit is 1.

In an embodiment, the signal received by the user equipment is agreed upon by a communication protocol.

In an embodiment, the signal received by the user equipment is configured by the network device.

In the above embodiment(s), the network device sends the wake-up signal carrying indication information to the user equipment, and the indication information indicates whether to wake up the user equipment group or not. After receiving the indication information, the user equipment determines whether to wake up itself or not based on the user equipment group to which the user equipment belongs. Using the above method, indication about the wake-up behaviors for different user equipment groups is realized by sending the wake-up signal.

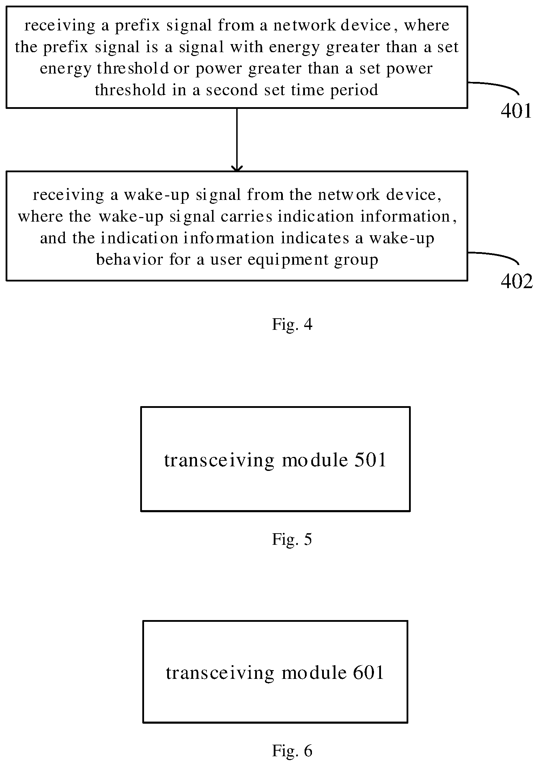

Embodiments of the present disclosure provide an information transmission method, which is performed by a user equipment. Fig. 4 is a flow chart of an information transmission method according to an example embodiment.

As shown in Fig. 4, the method includes:
step 401: receiving a prefix signal from a network device, where the prefix signal is a signal with energy greater than a set energy threshold or power greater than a set power threshold in a second set time period; and
step 402: receiving a wake-up signal from a network device, where the wake-up signal carries indication information, and the indication information indicates the wake-up behavior for the user equipment group.

The indication information includes N bits, where N is a positive integer greater than or equal to 1.

In an embodiment, the user equipment first receives the prefix signal sent by the network device, and then receives the wake-up signal sent by the network device. The wake-up signal carries indication information for indicating the wake-up behavior for the user equipment group, and the indication information includes N bits. After receiving the wake-up signal, the user equipment determines whether to wake up itself based on the indication information carried in the wake-up signal and the user equipment group to which the user equipment belongs.

For example, the wake-up signal is generated by using an MC-OOK modulation method.

The prefix signal is a signal known to the user equipment. In this embodiment, the prefix signal is received before receiving the wake-up signal. Thus, when the wake-up signal receiver of the user equipment does not receive the synchronization information, the user equipment can determine the arrival time of the wake-up signal based on the prefix signal, and then accurately determine the indication information carried by the wake-up signal.

Similar to the above embodiment, the user equipment determines the end time of the prefix signal as the start time of the wake-up signal, or the user equipment determines the time after the end time of the prefix signal plus a set time interval as the start time of the wake-up signal.

It should be noted that the prefix signal is a signal with energy greater than the set energy threshold or power greater than the set power threshold in a second set time period. For example, the prefix signal is an all-1 sequence containing P bits, where P is a positive integer greater than or equal to 1. Each bit corresponds to L time domain symbols or a third set time period. A number P of third set time periods are equal to the second set time period. The third set time period here may be equal to or not equal to the first set time period in the above embodiment.

In the above embodiment(s), the network device sends the wake-up signal carrying indication information to the user equipment, and the indication information indicates whether to wake up the user equipment group or not. After receiving the indication information, the user equipment determines whether to wake up itself or not based on the user equipment group to which the user equipment belongs. Using the above method, indication about the wake-up behaviors for different user equipment groups is realized by sending the wake-up signal.

Embodiments of the present disclosure provide an information transmission method, which is performed by the user equipment.

The method includes:
receiving a prefix signal from a network device, where the prefix signal includes P bits, and the P bits are a fourth category of binary sequence; and
receiving a wake-up signal from a network device, where the wake-up signal carries indication information, and the indication information indicates the wake-up behavior for the user equipment group.

The indication information includes N bits, where N is a positive integer greater than or equal to 1.

In an embodiment, the user equipment first receives the prefix signal sent by the network device, and then receives the wake-up signal sent by the network device. The wake-up signal carries indication information for indicating the wake-up behavior for the user equipment group, and the indication information includes N bits. After receiving the wake-up signal, the user equipment determines whether to wake up itself based on the indication information carried in the wake-up signal and the user equipment group to which the user equipment belongs.

For example, the wake-up signal is generated by using an MC-OOK modulation method.

The prefix signal is a signal known to the user equipment. The prefix signal is received before receiving the wake-up signal. Thus, when the wake-up signal receiver of the user equipment does not receive the synchronization information, the user equipment can determine the arrival time of the wake-up signal based on the prefix signal, and then accurately determine the indication information carried by the wake-up signal.

For example, the P bits included in the prefix signal may be a fourth category of binary sequence. When the user equipment receives the fourth category of binary sequence, it can be determined that the time when the fourth category of binary sequence ends is the start time of the wake-up signal.

For example, the P bits included in the prefix signal may be a fourth category of binary sequence. After a set time interval at the end of the fourth category of binary sequence received by the user equipment, the user equipment determines that this time is the start time of the wake-up signal, and then can accurately determine the indication information in the wake-up signal. That is, in this embodiment, there is a set time interval between the end time of the prefix signal and the start time of the wake-up signal.

The fourth category of binary sequence is a set sequence. For example, when P=4, the fourth category of binary sequence is 1010.

When the user equipment receives the prefix signal, if a signal with energy greater than a set energy threshold or power greater than a set power threshold is received in a time period corresponding to a bit, the value of this bit is determined to be 1; and if a signal with energy less than or equal to the set energy threshold or power less than or equal to the set power threshold is received in a time period corresponding to a bit, or if no signal is received, the value of this bit is determined to be 0.

In the above embodiment(s), the network device sends the wake-up signal carrying indication information to the user equipment, and the indication information indicates whether to wake up the user equipment group or not. After receiving the indication information, the user equipment determines whether to wake up itself or not based on the user equipment group to which the user equipment belongs. Using the above method, indication about the wake-up behaviors for different user equipment groups is realized by sending the wake-up signal.

Embodiments of the present disclosure provide an information transmission apparatus, which is arranged in the network device.

As shown in Fig. 5, the information transmission apparatus includes:
a transceiving module 501 configured to send a wake-up signal to the user equipment, where the wake-up signal carries indication information, and the indication information indicates the wake-up behavior for the user equipment group.

The indication information includes N bits, where N is a positive integer greater than or equal to 1.

Embodiments of the present disclosure provide an information transmission apparatus, which is arranged in a user equipment.

As shown in Fig. 6, the information transmission apparatus includes:
a transceiving module 601 configured to receive a wake-up signal from a network device, where the wake-up signal carries indication information, and the indication information indicates the wake-up behavior for the user equipment group.

The indication information includes N bits, where N is a positive integer greater than or equal to 1.

Embodiments of the present disclosure provide a network device, including:
a processor; and
a memory for storing instructions being executable by the processor.

The processor is configured to execute the executable instructions in the memory to implement steps of the above-mentioned information transmission method.

Embodiments of the present disclosure provides a mobile terminal, including:
a processor; and
a memory for storing instructions being executable by the processor.

The processor is configured to execute the executable instructions in the memory to implement steps of the above-mentioned information transmission method.

Embodiments of the present disclosure provide a non-transistory computer-readable storage medium, on which executable instructions are stored. When the executable instructions are executed by a processor, steps of the above-mentioned information transmission method are implemented.

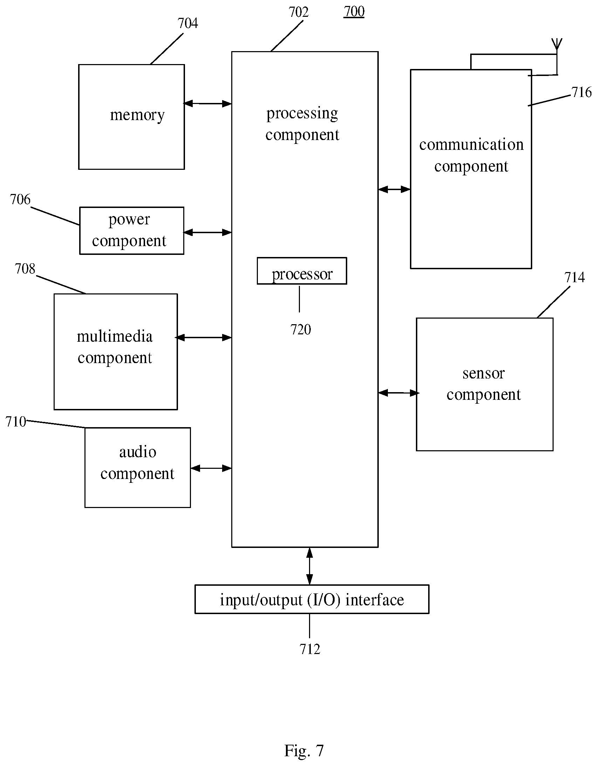

Fig. 7 is a block diagram of an information transmission device 700 shown according to an example embodiment. For example, the information transmission device 700 may be a mobile phone, a computer, a digital broadcast terminal, a messaging device, a game console, a tablet device, a medical device, a fitness device, a personal digital assistant, etc.

Referring to Fig. 7, the information transmission device 700 may include one or more of the following components: a processing component 702, a memory 704, a power component 706, a multimedia component 708, an audio component 710, an input/output (I/O) interface 712, a sensor component 714, and a communication component 716.

The processing component 702 generally controls the overall operation of the information transmission device 700, such as operations associated with display, phone calls, data communications, camera operations, and recording operations. The processing component 702 may include one or more processors 720 to execute instructions, so that all or some of the steps of the above-mentioned method are implemented. In addition, the processing component 702 may include one or more modules to facilitate interactions between the processing component 702 and other components. For example, the processing component 702 may include a multimedia module to facilitate interactions between the multimedia component 708 and the processing component 702.

The memory 704 is configured to store various types of data to support operations in the information transmission device 700. Examples of such data include: instructions for any application or method operating on the information transmission device 700, contact data, phone book data, messages, pictures, videos, etc. The memory 704 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk, or optical disk.

The power component 706 provides power to various components of the information transmission device 700. The power component 706 may include a power management system, one or more power supplies, and other components associated with generating, managing, and distributing power for the information transmission device 700.

The multimedia component 708 includes a screen that provides an output interface between the information transmission device 700 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensor may not only sense the boundary of the touch or sliding action, but also detect the duration and pressure associated with the touch or sliding operation. In some embodiments, the multimedia component 708 includes a front camera and/or a rear camera. When the information transmission device 700 is in an operating mode, such as a shooting mode or a video mode, the front camera and/or the rear camera may receive external multimedia data. Each of the front camera and the rear camera may be a fixed optical lens system or have a focal length and optical zooming capability.

The audio component 710 is configured to output and/or input audio signals. For example, the audio component 710 includes a microphone (MIC). When the information transmission device 700 is in an operating mode, such as a call mode, a recording mode, and a voice recognition mode, the microphone is configured to receive an external audio signal. The received audio signal may be further stored in the memory 704 or sent via the communication component 716. In some embodiments, the audio component 710 also includes a speaker for outputting audio signals.

The I/O interface 712 provides an interface between the processing component 702 and the peripheral interface module. The peripheral interface module may be a keyboard, a click wheel, a button, etc. These buttons may include, but are not limited to, a home button, a volume button, a start button, and a lock button.

The sensor component 714 includes one or more sensors for providing various aspects of the status assessment for the information transmission device 700. For example, the sensor component 714 may detect the on/off state of the information transmission device 700, the relative positioning among components, such as display and keypad of the information transmission device 700. The sensor component 714 may also detect the position change of the information transmission device 700 or a component of the information transmission device 700, the presence or absence of user contact with the information transmission device 700, the orientation or acceleration/deceleration of the information transmission device 700, and the temperature change of the information transmission device 700. The sensor component 714 may include a proximity sensor configured to detect the presence of nearby objects without any physical contact. The sensor component 714 may also include a light sensor, such as a CMOS or CCD image sensor, for use in imaging applications. In some embodiments, the sensor component 714 may also include an accelerometer, a gyroscope sensor, a magnetic sensor, a pressure sensor, or a temperature sensor.

The communication component 716 is configured to facilitate wired or wireless communication between the information transmission device 700 and other devices. The information transmission device 700 may access a wireless network based on a communication standard, such as WiFi, 2G, 3G, or a combination thereof. In an example embodiment, the communication component 716 receives a broadcast signal or broadcast-related information from an external broadcast management system via a broadcast channel. In an example embodiment, the communication component 716 also includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology, and other technologies.

In an example embodiment, the information transmission device 700 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components for performing the above method(s).

In an example embodiment, a non-transistory computer-readable storage medium including instructions is also provided, such as a memory 704 including instructions. The above instructions may be executed by the processor 720 of the information transmission device 700 to complete the above method(s). For example, the non-transistory computer-readable storage medium may be a ROM, a random access memory (RAM), a CD-ROM, a magnetic tape, a floppy disk, an optical data storage device, etc.

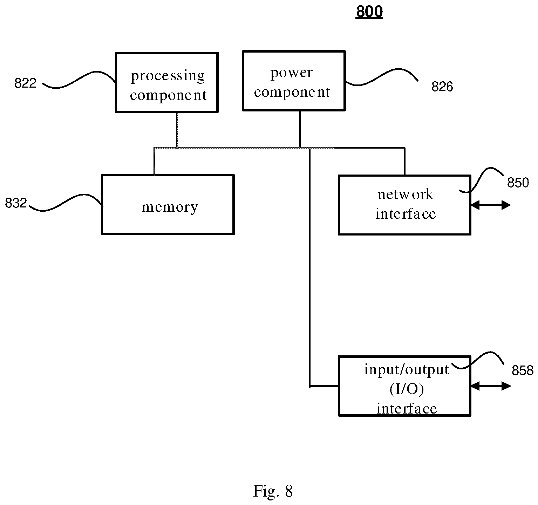

Fig. 8 is a block diagram of an information transmission device 800 according to an example embodiment. For example, the information transmission device 800 may be provided as a base station. Referring to Fig. 8, the information transmission device 800 includes a processing component 822, which further includes one or more processors, and a memory resource represented by a memory 832 for storing instructions executable by the processing component 822, such as an application. The application stored in the memory 832 may include one or more modules each corresponding to a set of instructions. In addition, the processing component 822 is configured to execute instructions for performing the above-mentioned information transmission method(s).

The information transmission device 800 may also include: a power component 826 configured to perform power management for the information transmission device 800, a wired or wireless network interface 850 configured to connect the information transmission device 800 to a network, and an input/output (I/O) interface 859. The information transmission device 800 may operate based on an operation system stored in the memory 832, such as Windows ServerTM, Mac OS XTM, UnixTM, LinuxTM, FreeBSDTM or the like.

After considering the present specification and practicing the approach(s) disclosed herein, a person skilled in the art may easily conceive of other embodiments of the present disclosure. The present application is intended to cover any variation, use or adaptation of the embodiments of the present disclosure, which follows the general principle of the embodiments of the present disclosure and includes common knowledge or customary technical means in the art that are not disclosed in the present disclosure. The description and embodiments are to be regarded as examples only, and the true scope and spirit of the embodiments of the present disclosure are indicated by the following claims.

It should be understood that the embodiments of the present disclosure are not limited to the precise structure(s) described above and shown in the drawings, and various modifications and changes may be made without departing from the scope thereof. The scope of the embodiments of the present disclosure is limited only by the appended claims.

### Industrial Applicability

The network device sends a wake-up signal carrying indication information to the user equipment, and the indication information indicates whether to wake up the user equipment group or not. After receiving the indication information, the user equipment determines whether to wake up itself or not based on the user equipment group to which the user equipment belongs. The above method(s) is used to send a wake-up signal to indicate the wake-up behaviors for different user equipment groups.

## Claims

1. An information transmission method, performed by a network device, and comprising:
sending a wake-up signal to a user equipment, wherein the wake-up signal carries indication information, and the indication information indicates a wake-up behavior for a user equipment group,
wherein the indication information comprises N bits, where N is a positive integer greater than or equal to 1.

2. The method according to claim 1, wherein the wake-up signal is generated by using a multi-carrier on-off keying modulation method.

3. The method according to claim 1, wherein each bit in the N bits of the indication information indicates whether to wake-up the user equipment group corresponding to the bit.

4. The method according to claim 1, wherein the N bits of the indication information are a first category of binary sequence, and the indication information indicates waking up all the user equipment groups corresponding to the wake-up signal.

5. The method according to claim 4, wherein the first category of binary sequence is an all-1 sequence.

6. The method according to claim 1, wherein the N bits of the indication information are a second category of binary sequence, and the indication information indicates not waking up any user equipment group corresponding to the wake-up signal.

7. The method according to claim 6, wherein the second category of binary sequence is an all-0 sequence.

8. The method according to claim 1, wherein the N bits of the indication information is a third category of binary sequence, and the indication information indicates waking up at least one user equipment group in the user equipment groups corresponding to the wake-up signal.

9. The method according to claim 1, wherein sending the wake-up signal to the user equipment comprises:
in response to a value of one bit in the N bits of the indication information being 1, sending a signal with energy greater than a set energy threshold or power greater than a set power threshold on M subcarriers corresponding to the bit with the value of 1; or
in response to the value of one bit in the N bits of the indication information being 0, sending a signal with energy less than or equal to the set energy threshold or power less than or equal to the set power threshold on M subcarriers corresponding to the bit with the value of 0, or not sending a signal,
wherein M is a positive integer greater than or equal to 1.

10. The method according to claim 1, wherein sending the wake-up signal to the user equipment comprises:
in response to a value of one bit in the N bits of the indication information being 1, sending a signal with energy greater than a set energy threshold or power greater than a set power threshold on a set frequency domain bandwidth corresponding to the bit with the value of 1; or
in response to the value of one bit in the N bits of the indication information being 0, sending a signal with energy less than or equal to the set energy threshold or power less than or equal to the set power threshold on a set frequency domain bandwidth corresponding to the bit with the value of 0, or not sending a signal.

11. The method according to claim 1, wherein sending the wake-up signal to the user equipment comprises:
in response to a value of one bit in the N bits of the indication information being 1, sending a signal with energy greater than a set energy threshold or power greater than a set power threshold on L time domain symbols corresponding to the bit with the value of 1; or
in response to the value of one bit in the N bits of the indication information being 0, sending a signal with energy less than or equal to the set energy threshold or power less than or equal to the set power threshold on L time domain symbols corresponding to the bit with the value of 0, or not sending a signal,
wherein L is a positive integer greater than or equal to 1.

12. The method according to claim 1, wherein sending the wake-up signal to the user equipment comprises:
in response to a value of one bit in the N bits of the indication information being 1, sending a signal with energy greater than a set energy threshold or power greater than a set power threshold during a first set time period corresponding to the bit with the value of 1; or
in response to the value of one bit in the N bits of the indication information being 0, sending a signal with energy less than or equal to the set energy threshold or power less than or equal to the set power threshold during a first set time period corresponding to the bit with the value of 0, or not sending a signal.

13. The method according to any one of claims 9 to 12, wherein the signal is agreed upon by a communication protocol or configured by a network device.

14. The method according to any one of claims 9 to 12, wherein the signal is one of: a binary phase shift keying signal, an orthogonal phase shift keying signal, or an orthogonal amplitude modulation signal.

15. The method according to claim 1, wherein before sending the wake-up signal to the user equipment, the method further comprises:
sending a prefix signal to the user equipment,
wherein the prefix signal is a signal with energy greater than a set energy threshold or power greater than a set power threshold in a second set time period.

16. The method according to claim **1,** wherein before sending the wake-up signal to the user equipment, the method further comprises:
sending a prefix signal to the user equipment,
wherein the prefix signal comprises P bits, and the P bits are a fourth category of binary sequence.

17. An information transmission method, performed by a user equipment, and comprising:
receiving a wake-up signal from a network device, wherein the wake-up signal carries indication information, and the indication information indicates a wake-up behavior for a user equipment group,
wherein the indication information comprises N bits, where N is a positive integer greater than or equal to 1.

18. The method according to claim 17, wherein the wake-up signal is generated by using a multi-carrier on-off keying modulation method.

19. The method according to claim 17, wherein each bit in the N bits of the indication information indicates whether to wake-up the user equipment group corresponding to the bit.

20. The method according to claim 17, wherein the N bits of the indication information are a first category of binary sequence, and the indication information indicates waking up all the user equipment groups corresponding to the wake-up signal.

21. The method according to claim 20, wherein the first category of binary sequence is an all-1 sequence.

22. The method according to claim 17, wherein the N bits of the indication information are a second category of binary sequence, and the indication information indicates not waking up any user equipment group corresponding to the wake-up signal.

23. The method according to claim 22, wherein the second category of binary sequence is an all-0 sequence.

24. The method according to claim 17, wherein the N bits of the indication information are a third category of binary sequence, and the indication information indicates waking up at least one user equipment group in the user equipment groups corresponding to the wake-up signal.

25. The method according to claim 17, wherein the method further comprises:
in response to receiving a signal with energy greater than a set energy threshold or power greater than a set power threshold on M subcarriers, determining that a value of a bit in the indication information corresponding to the M subcarriers is 1; or
in response to receiving a signal with energy less than or equal to the set energy threshold or power less than or equal to the set power threshold on the M subcarriers, or in response to receiving no signal, determining that the value of the bit in the indication information corresponding to the M subcarriers is 0,
wherein M is a positive integer greater than or equal to 1.

26. The method according to claim 17, wherein the method further comprises:
in response to receiving a signal with energy greater than a set energy threshold or power greater than a set power threshold on a set frequency domain bandwidth, determining that a value of a bit in the indication information corresponding to the set frequency domain bandwidth is 1; or
in response to receiving a signal with energy less than or equal to the set energy threshold or power less than or equal to the set power threshold on the set frequency domain bandwidth, or in response to receiving no signal, determining that the value of the bit in the indication information corresponding to the set frequency domain bandwidth is 0.

27. The method according to claim 17, wherein the method further comprises:
in response to receiving a signal with energy greater than a set energy threshold or power greater than a set power threshold on L time domain symbols, determining that a value of a bit in the indication information corresponding to the L time domain symbols is 1; or
in response to receiving a signal with energy less than or equal to the set energy threshold or power less than or equal to the set power threshold on the L time domain symbols, or in response to receiving no signal, determining that the value of the bit in the indication information corresponding to the L time domain symbols is 0,
wherein L is a positive integer greater than or equal to 1.

28. The method according to claim 17, wherein the method further comprises:
in response to receiving a signal with energy greater than a set energy threshold or power greater than a set power threshold during a first set time period, determining that a value of a bit in the indication information corresponding to the first set time period is 1; or
in response to receiving a signal with energy less than or equal to the set energy threshold or power less than or equal to the set power threshold during the first set time period, or in response to receiving no signal, determining that the value of the bit in the indication information corresponding to the first set time period is 0.

29. The method according to any one of claims 25-28, wherein the signal is agreed upon by a communication protocol or configured by a network device.

30. The method according to any one of claims 25-28, wherein the signal is one of: a binary phase shift keying signal, an orthogonal phase shift keying signal, or an orthogonal amplitude modulation signal.

31. The method according to claim 17, wherein before receiving the wake-up signal from the network device, the method further comprises:
receiving a prefix signal from the network device,
wherein the prefix signal is a signal with energy greater than a set energy threshold or power greater than a set power threshold in a second set time period.

32. The method according to claim 17, wherein before receiving the wake-up signal from the network device, the method further comprises:
receiving a prefix signal from the network device,
wherein the prefix signal comprises P bits, and the P bits are a fourth category of binary sequence.

33. An information transmission apparatus, arranged in a network device, and comprising:
a transceiving module, configured to send a wake-up signal to a user equipment, wherein the wake-up signal carries indication information, and the indication information indicates a wake-up behavior for a user equipment group,
wherein the indication information comprises N bits, where N is a positive integer greater than or equal to 1.

34. An information transmission apparatus, arranged in a user equipment, and comprising:
a transceiving module, configured to receive a wake-up signal from a network device, wherein the wake-up signal carries indication information, and the indication information indicates a wake-up behavior for a user equipment group,
wherein the indication information comprises N bits, where N is a positive integer greater than or equal to 1.

35. A network device, comprising:
a processor; and
a memory for storing instructions being executable by the processor,
wherein the processor is configured to execute the executable instructions in the memory to implement steps of the information transmission method according to any one of claims 1 to 16.

36. A mobile terminal, comprising:
a processor; and
a memory for storing instructions being executable by the processor,
wherein the processor is configured to execute the executable instructions in the memory to implement steps of the information transmission method according to any one of claims 17 to 32.

37. A non-transitory computer-readable storage medium having executable instructions stored thereon, wherein the executable instructions, when executed by the processor, implement steps of the information transmission method according to any one of claims 1 to 16 or steps of the information transmission method according to any one of claims 17 to 32.
